# EUROPÄISCHE PATENTANMELDUNG

(11) **EP 1 286 474 A2**
(43) Veröffentlichungstag der Anmeldung: **26.02.2003**
(21) Anmeldenummer: 02018027.9
(22) Anmeldetag: 12.08.2002
(51) Int. Cl.: H04B 1/16

(54) **Verfahren zum Umschalten eines Stereoempfängers von Stereo- auf Mono- und von Mono- auf Stereowiedergabe und Stereoempfänger**

(30) Priorität: 14.08.2001 DE 10139823
(71) Anmelder: Harman/ Becker Automative Systems (Becker Division) GmbH, 76307 Karlsbad (DE)
(72) Erfinder: Benz, Christoph, 77797 Ohlsbach (DE); Gierl, Stefan, 76133 Karlsruhe (DE)
(74) Vertreter: Göhring, Robert

(57) **Zusammenfassung**

Um bei einem Stereoempfänger ständigen Schwankungen der Empfangsqualität folgendes die Zuhörer störendes Hin- und Herschalten zwischen Stereo- und Monowiedergabe, wie es z. B. während der Fahrt mit einem Auto mit Stereoempfänger in einer Gebirgslandschaft oder in den Straßenschluchten einer Großstadt auftritt, zu vermeiden, wird das Umschalten von Monoauf Stereowiedergabe nicht nur in Abhängigkeit von der Empfangsqualität, sondern auch von der Anzahl der im jeweils letzten vergangenen Zeitabschnitt vorgebbarer Länge erfolgten Umschaltvorgänge gesteuert. So erfolgt das Umschalten von Mono- auf Stereowiedergabe z. B. nach einer Hysterese, die mit steigender Anzahl der Umschaltvorgänge vergrößert wird. Alternativ oder zusätzlich hierzu kann das Umschalten bei Erreichen eines für Stereowiedergabe ausreichenden Schwellwertes verzögert erfolgen. Die Verzögerungszeit wird z. B. mit zunehmender Anzahl der Umschaltvorgänge erhöht.

## Beschreibung

Verfahren zum Umschalten eines Stereoempfängers von Stereoauf Mono- und von Mono- auf Stereowiedergabe und Stereoempfänger

Die Erfindung betrifft ein Verfahren zum Umschalten eines Stereoempfängers von Stereo- auf Mono- und von Mono- auf Stereowiedergabe in Abhängigkeit von der Empfangsqualität.

Die Erfindung betrifft weiter einen Stereoempfänger, der in Abhängigkeit von der Empfangsqualität von Stereo- auf Monound von Mono- auf Stereowiedergabe umschaltbar ist.

Hochwertige Stereoempfänger sind z. B. mit einer Steuerung ausgerüstet, die in Abhängigkeit von der Empfangsqualität den Stereo- und den Monoanteil im Ausgangssignal steuert. Man spricht von einer sog. Kanaltrennung, die insbesondere für Stereoempfänger in Fahrzeugen geeignet ist, weil die Empfangsqualität für Stereoempfang in Folge der Beschaffenheit des gerade befahrenen Geländes häufig nicht mehr ausreicht. Aus diesem Grund wird bei sich verschlechternden Empfangsbedingungen der Stereoanteil im Wiedergabesignal verringert, während gleichzeitig der Monoanteil erhöht wird. Diese stufenlose Verschiebung von Stereo zu Mono kann bei schlechten Empfangsbedingungen bis zur vollständigen Monowiedergabe gehen. Verbessert sich die Empfangsqualität, so wird der Stereoanteil wieder erhöht, während gleichzeitig der Monoanteil verringert wird, bis schließlich bei ausreichender Empfangsqualität vollständige Stereowiedergabe erfolgt. Bei Stereoempfängern einfacherer Bauart kann dagegen nur zwischen Mono- und Stereowiedergabe umgeschaltet werden. Ein gleitender Übergang zwischen den beiden Wiedergabearten ist nicht vorgesehen.

Bei starken Einbrüchen der Empfangsqualität, die für Stereowiedergabe nicht mehr ausreichen, wird ständig zwischen Stereo- und Monowiedergabe hin- und hergeschaltet. Bei häufig wechselnden Empfangsbedingungen, wie sie z. B. während der Fahrt in einer Gebirgslandschaft mit Tälern oder in den Straßenschluchten einer Großstadt mit hohen Gebäuden auftreten, kann unter ungünstigen Bedingungen daher ständig zwischen Stereo- und Monowiedergabe hin- und hergeschaltet werden.

Ständiges Umschalten von Stereo- auf Mono- und von Mono- auf Stereowiedergabe wird aber vom Zuhörer eher als lästig empfunden als eine stetige Monowiedergabe.

Es ist daher Aufgabe der Erfindung, eine Beeinträchtigung des Klangbildes durch zu häufiges Hin- und Herschalten zwischen Stereo- und Monowiedergabe zu verhindern.

Verfahrensmäßig wird diese Aufgabe mit den im Anspruch 1 angegebenen Merkmalen dadurch gelöst, daß das Umschalten von Monoauf Stereowiedergabe sowohl in Abhängigkeit von der Empfangsqualität als auch von der jeweiligen Anzahl der im jeweils letzten vergangenen Zeitabschnitt vorgebbarer Länge erfolgten Umschaltvorgänge gesteuert wird.

Schaltungsmäßig wird diese Aufgabe bei einem in Abhängigkeit von der Empfangsqualität von Stereo- auf Mono- und von Monoauf Stereowiedergabe umschaltbaren Stereoempfänger mit den im Anspruch 8 angegebenen Merkmalen dadurch gelöst, daß das Umschalten von Mono- auf Stereowiedergabe sowohl in Abhängigkeit von der Empfangsqualität als auch von der jeweiligen Anzahl der im jeweils letzten vergangenen Zeitabschnitt vorgebbarer Länge erfolgten Umschaltvorgänge steuerbar ist.

Bei dem erfindungsgemäßen Verfahren und Stereoempfänger erfolgt die Umschaltung von Mono- zu Stereowiedergabe nicht nur in Abhängigkeit von der Empfangsqualität, sondern auch von der Anzahl der in der Vergangenheit durchgeführten Umschaltvorgänge, die in dem jeweils unmittelbar hinter der Gegenwart zurückliegenden vergangenen Zeitabschnitt vorgebbarer Länge gezählt werden. Eine Verbesserung der Empfangsqualität auf einen für Stereowiedergabe ausreichend hohen Wert führt bei der Erfindung daher nicht immer automatisch zu einer Umschaltung von Mono- auf Stereowiedergabe. Vielmehr wird noch zusätzlich geprüft, wie viele Umschaltvorgänge in dem erwähnten vergangenen Zeitabschnitt durchgeführt worden sind. Je nach der ermittelten Anzahl der Umschaltvorgänge wird sofort oder nach einer vorgebbaren Verzögerung von Mono- auf Stereowiedergabe umgeschaltet.

Alternativ oder auch zusätzlich zur Verzögerungszeit kann vorgesehen werden, den Schwellwert bei dem von Mono- auf Stereowiedergabe umzuschalten ist, in Abhängigkeit von der Anzahl der im jeweils vergangenen Zeitabschnitt gezählten Umschaltvorgänge zu erhöhen, so daß die Umschaltvorgänge gemäß einer Hysterese erfolgen, die mit steigender Anzahl der gezählten Umschaltvorgänge ebenfalls erhöht werden kann.

Der Schwellwert für die Umschaltung von Mono- auf Stereowiedergabe kann z. B. ebenso groß gewählt werden wie der Schwellwert zur Umschaltung von Stereo- auf Monowiedergabe. Die Hysterese wird erst dann eingeführt, wenn die Anzahl der im vergangenen Zeitabschnitt erfolgten Umschaltvorgänge eine vorgebbare Anzahl überschreitet. Es kann aber auch grundsätzlich von vornherein eine Hysterese vorgesehen werden.

Die Verzögerungszeit, nach welcher bei Erreichen einer für Stereowiedergabe ausreichenden Empfangsqualität von Mono- auf Stereowiedergabe umgeschaltet wird, kann z. B. ebenfalls mit der Anzahl der im vergangenen Zeitabschnitt gezählten Umschaltvorgänge erhöht werden. Vorzugsweise werden die Umschaltvorgänge von einem Zähler gezählt.

Die Empfangsqualität kann z. B. aus der Empfangsfeldstärke oder aus einem vom Tuner des Stereoempfängers erzeugten Qualitätssignal abgeleitet werden.

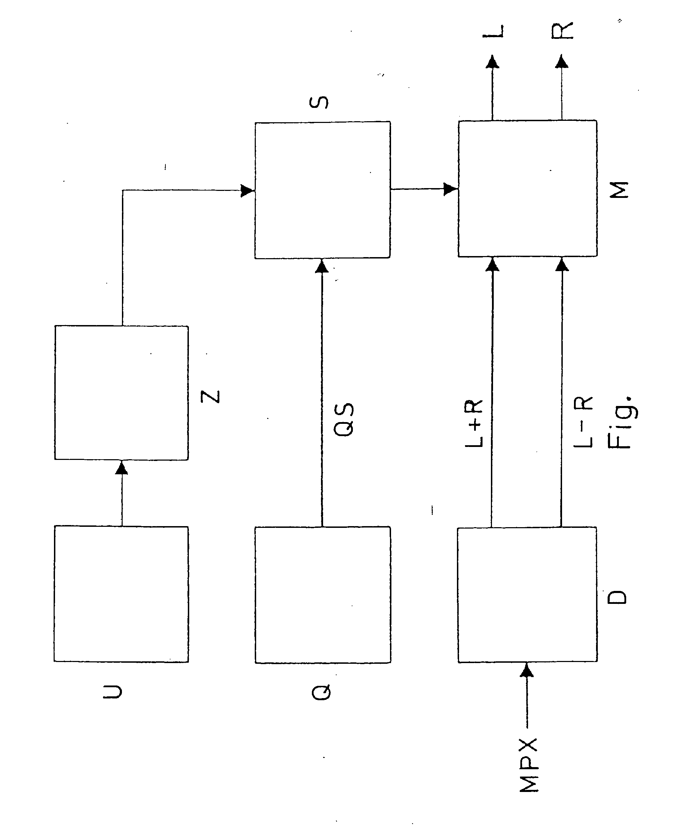

Das erfindungsgemäße Verfahren und der erfindungsgemäße Stereoempfänger werden anhand des in der Figur gezeigten Ausführungsbeispieles näher beschrieben und erläutert.

Der Ausgang einer die Umschaltvorgänge steuernden Einheit U ist mit dem Zähleingang eines Zählers Z verbunden, dessen Ausgang mit dem Stelleingang eines Schwellwertschalters S verbunden ist, dessen Schwellwert einstellbar ist. Der Ausgang einer die Empfangsqualität messenden Einheit Q ist mit dem Steuereingang des Schwellwertschalters S verbunden, dessen Ausgang mit dem Steuereingang einer Stereomatrix M verbunden ist, an deren Eingänge die Ausgänge eines Stereodecoders D angeschlossen sind. Dem Stereodecoder D, der das (L+R)- und das (L-R)-Signal erzeugt, wird das Stereomultiplexsignal MPX zugeführt. Aus dem vom Stereodecoder D empfangenen (L+R)- und (L-R)-Signal erzeugt die Stereomatrix M das R- und das L-Signal, die an deren Ausgängen abgreifbar sind.

Die die Empfangsqualität bestimmende Einheit Q erzeugt ein Qualitätssignal QS, das den Schwellwertschalter S steuert, der die Stereomatrix M von Stereo- auf Mono- und von Mono- auf Stereowiedergabe umschaltet. Der Zählerstand des Zählers Z, der die von der Umschalteinheit U bewirkten Umschaltvorgänge zählt, bestimmt im Schwellwertschalter S den Schwellwert, bei welchem von Mono- wieder auf Stereowiedergabe zurückgeschaltet wird.

Die Erfindung hat den Vorteil, daß bei ständig wechselnden Empfangsverhältnissen nicht ebenso den Schwankungen der Empfangsverhältnisse folgend zwischen Stereo- und Monowiedergabe hin- und hergeschaltet wird. Erst wenn eine vorgebbare Zeit ununterbrochen wieder günstige Stereoempfangsverhältnisse herrschen, wird von Mono- auf Stereowiedergabe umgeschaltet. Dies kann durch verzögertes Umschalten von Mono- auf Stereowiedergabe oder durch Einführen einer Hysterese oder durch beides bewirkt werden.

Bezugszeichenliste
- D: Stereodemodulator
- L: L-Signal
- L+R: (L+R)-Signal
- L-R: (L-R)-Signal
- M: Stereomatrix
- MPX: Stereomultiplexsignal
- Q: die Empfangsqualität messende Einheit
- QS: Qualitätssignal
- R: R-Signal
- S: Schwellwertschalter
- U: die Umschaltvorgänge steuernde Einheit
- Z: Zähler

## Patentansprüche

1. Verfahren zum Umschalten eines Stereoempfängers von Stereo- auf Mono- und von Mono- auf Stereowiedergabe in Abhängigkeit von der Empfangsqualität,
**dadurch gekennzeichnet, daß** das Umschalten von Mono- auf Stereowiedergabe sowohl in Abhängigkeit von der Empfangsqualität als auch von der Anzahl der im jeweils letzten vergangenen Zeitabschnitt vorgebbarer Länge erfolgten Umschaltvorgänge gesteuert wird.

2. Verfahren nach Anspruch 1,
**dadurch gekennzeichnet, daß** das Umschalten derart gemäß einer Hysterese erfolgt, daß der Schwellwert der Empfangsqualität, bei welchem von Monoauf Stereowiedergabe umgeschaltet wird, größer gewählt wird als der Schwellwert, bei welchem von Stereo- auf Monowiedergabe umgeschaltet wird.

3. Verfahren nach Anspruch 1 oder 2,
**dadurch gekennzeichnet, daß** der Schwellwert der Empfangsqualität, bei dem von Mono- auf Stereowiedergabe umgeschaltet wird, mit steigender Anzahl der im jeweils vergangenen Zeitabschnitt erfolgten Umschaltvorgänge erhöht wird, so daß die Hyterese vergrößert wird.

4. Verfahren nach Anspruch 1, 2 oder 3,
**dadurch gekennzeichnet, daß** der Schwellwert der Empfangsqualität, bei welchem von Monoauf Stereowiedergabe umgeschaltet wird, größer gewählt wird als der Schwellwert der Empfangsqualität, bei dem von Stereo- auf Monowiedergabe umgeschaltet wird, wenn die Anzahl der im jeweils vergangenen Zeitabschnitt erfolgten Umschaltvorgänge eine vorgebbare Anzahl überschreitet.

5. Verfahren nach Anspruch 1, 2, 3 oder 4,
**dadurch gekennzeichnet,daß** die Umschaltung von Mono- auf Stereowiedergabe um eine vorgebbare Verzögerungszeit verzögert erfolgt, die von der Anzahl im jeweils letzten vergangenen Zeitabschnitt erfolgten Umschaltvorgänge abhängt, wenn die Empfangsqualität einen vorgebbaren Schwellwert übersteigt.

6. Verfahren nach Anspruch 5,
**dadurch gekennzeichnet,daß** die Verzögerungszeit mit zunehmender Anzahl der Umschaltvorgänge ansteigt.

7. Verfahren nach einem der vorangehenden Ansprüche 1 - 6, **dadurch gekennzeichnet,daß** die Umschaltvorgänge von einem Zähler (Z) gezählt werden, von dessen Zählerstand die vorgebbare Verzögerungszeit und/oder der Schwellwert der Empfangsqualität abhängt, bei welchem von Mono- auf Stereowiedergabe umgeschaltet wird.

8. Stereoempfänger, der in Abhängigkeit von der Empfangsqualität von Stereo- auf Mono- und von Mono- auf Stereowiedergabe umschaltbar ist,
**dadurch gekennzeichnet, daß** das Umschalten von Mono- auf Stereowiedergabe sowohl in Abhängigkeit von der Empfangsqualität als auch von der Anzahl der im jeweils letzten vergangenen Zeitabschnitt vorgebbarer Länge erfolgten Umschaltvorgänge steuerbar ist.

9. Stereoempfänger nach Anspruch 8,
**dadurch gekennzeichnet, daß** das Umschalten derart gemäß einer Hysterese erfolgt, daß der Schwellwert der Empfangsqualität bei welchem von Mono- auf Stereowiedergabe umgeschaltet wird, größer gewählt ist als der Schwellwert, bei welchem von Stereo- auf Monowiedergabe umgeschaltet wird.

10. Stereoempfänger nach Anspruch 8 oder 9,
**dadurch gekennzeichnet, daß** der Schwellwert der Empfangsqualität, bei welchem von Monoauf Stereowiedergabe umgeschaltet wird, mit steigender Anzahl der im jeweils vergangenen Zeitabschnitt erfolgten Umschaltvorgänge erhöhbar ist, so daß die Hysterese vergrößerbar ist.

11. Stereoempfänger nach Anspruch 8, 9 oder 10,
**dadurch gekennzeichnet, daß** der Schwellwert der Empfangsqualität, bei welchem von Monoauf Stereowiedergabe umgeschaltet wird, größer gewählt ist als der Schwellwert der Empfangsqualität, bei welchem von Stereo- auf Monowiedergabe umgeschaltet wird, wenn die Anzahl der im jeweils vergangenen Zeitabschnitt erfolgten Umschaltvorgänge eine vorgebbare Anzahl übersteigt.

12. Stereoempfänger nach Anspruch 8, 9, 10 oder 11,
**dadurch gekennzeichnet, daß** die Umschaltung von Mono- auf Stereowiedergabe um eine vorgebbare von der Anzahl der im jeweils letzten vorgangenen Zeitabschnitt vorggebbarer Länge erfolgten Umschaltvörgänge abhängige Verzögerungszeit verzögerbar ist, wenn die Empfangsqualität einen vorgebbaren Schwellwert übersteigt.

13. Stereoempfänger nach Anspruch 12,
**dadurch gekennzeichnet, daß** die Verzögerungszeit mit zunehmender Anzahl der Umschaltvorgänge verlängerbar ist.

14. Stereoempfänger nach einem der Ansprüche 8 - 13,
**dadurch gekennzeichnet, daß** zum Zählen der Umschaltvorgänge ein Zähler (Z) vorgesehen ist, von dessen Zählerstand die vorgebbare Verzögerungszeit und/oder der Schwellwert der Empfangsqualität abhängt, bei dem von Mono- auf Stereowiedergabe umgeschaltet wird.

15. Stereoempfänger nach Anspruch 14,
**dadurch gekennzeichnet,daß** ein Ausgang einer die Umschaltvorgänge steuernden Einheit (U) mit dem Zähleingang des Zählers (Z) verbunden ist, dessen Ausgang mit dem Stelleingang eines einstellbaren Schwellwertschalters (S) verbunden ist, daß der Ausgang einer die Empfangsqualität messenden Einheit (U), an dem ein Qualitätssignal (QS) abnehmbar ist, mit dem Eingang des Schwellwertschalters (S) verbunden ist, dessen Ausgang mit dem Steuereingang einer Stereomatrix (M) verbunden ist, daß das Stereomultiplexsignal (MPX) am Eingang eines Stereodemodulators (D) liegt, dessen beide Ausgänge, an denen das (L+R)-Signal und das (L-R)-Signal abgreifbar sind, mit den Eingängen der Stereomatrix (M) verbunden sind, an deren Ausgängen das R-Signal (R) und das L-Signal (L) abnehmbar sind.

16. Verfahren oder Stereoempfänger nach einem der vorangehenden Ansprüche,
**dadurch gekennzeichnet, daß** die Empfangsqualität aus der Empfangsfeldstärke ermittelt wird bzw. ermittelbar ist.

17. Verfahren oder Stereoempfänger nach einem der vorangehenden Ansprüche 1 - 15,
**dadurch gekennzeichnet, daß** die Empfangsqualität aus einem vom Tuner des Stereoempfängers erzeugten Qualitätssignal (QS) abgeleitet wird bzw. ableitbar ist.
